# FASCICULE DE BREVET EUROPEEN

(11) **EP 3 480 942 B1**
(45) Date de publication et mention de la délivrance du brevet: **22.06.2022**
(21) Numéro de dépôt: 18186382.0
(22) Date de dépôt: 30.07.2018
(51) Int. Cl.: H02S 20/23, F24S 25/65, F24S 25/61, E04D 1/30

(54) **DISPOSITIF DE FIXATION DE PANNEAU SOLAIRE SUR TOITURE**
BEFESTIGUNGSVORRICHTUNG EINES SOLARPANEELS AUF DEM DACH
DEVICE FOR FIXING A SOLAR PANEL TO A ROOF

(30) Priorité: 02.11.2017 FR 1760330; 04.05.2018 FR 1853859
(43) Date de publication de la demande: 08.05.2019
(73) Titulaire: Terreal, 92150 Suresnes (FR)
(72) Inventeur: MALE, Philippe, 31500 Toulouse (FR); FREYSSINET, Jean Paul, 75019 Paris (FR); YORDANOV, Krasimir, 93400 Saint Ouen (FR); TAUPIAC, Albert, 92150 Suresnes (FR); PAILHE, Patrick, 92150 Suresnes (FR)
(74) Mandataire: Loyer & Abello

(56) Documents cités:
- FR-A1- 2 223 544
- JP-A- H07 247 635
- JP-A- 2014 070 340
- US-A1- 2010 236 609
- US-A1- 2013 086 852
- US-A1- 2016 248 369
- US-B1- 8 549 793

## Description

### Domaine technique

L'invention se rapporte au domaine du montage d'une installation photovoltaïque sur une charpente recouverte de tuiles.

L'invention concerne plus particulièrement un dispositif de montage pour monter une installation photovoltaïque sur une charpente recouverte de tuile, un ensemble de montage pour monter une installation photovoltaïque comportant une pluralité de dispositifs de montage, un système photovoltaïque comportant un tel ensemble de montage et enfin un procédé de montage d'un ensemble de montage sur une toiture.

### Arrière-plan technologique

Dans l'état de la technique, il existe différents types de montage d'une installation photovoltaïque.

Un premier type de montage, le plus répandu, est un montage intégré à la toiture, c'est-à-dire que le montage de l'installation photovoltaïque se fait en lieu et place de tuiles de la toiture. Dans ce montage, il est donc nécessaire de prévoir des moyens d'étanchéité autour de l'installation photovoltaïque, donc entre l'installation et les tuiles encore en place. Ce montage s'il permet un gain de place en hauteur et une intégration complète dans la structure de la toiture, présente l'inconvénient d'accroitre les risques d'infiltration d'eau au niveau des moyens d'étanchéité.

Un deuxième type de montage est un montage dit en sur élévation, c'est-à-dire que l'installation photovoltaïque est fixé par l'intermédiaire de dispositif de montage, au-dessus de la toiture, sur ou au travers des tuiles en venant s'ancrer sur la charpente. Ce type de montage présente également des forts risques d'infiltration d'eau ou de déchets, tels que des feuilles, au niveau des dispositifs de montage. De plus, le montage est complexe et doit être en mesure de compenser les tolérances de montage des tuiles, celles-ci étant susceptibles d'être importantes.

Le document US2013/086852 décrit un système et un procédé de montage de panneaux solaires photovoltaïques sur un toit.

Le document JPH07247635 décrit une structure pour le montage d'un objet à monter sur un toit dans lequel un trou traversant est formé dans une tuile correspondant à une partie de montage d'un objet à monter sur une tuile, et un raccord de réception est inséré dans le trou traversant. Après avoir fixé l'objet sur la plaque de base du toit et avoir ensuite relié l'objet à monter à la plaque de base par le trou d'insertion, l'objet à monter peut être fixé solidement sur la plaque de base du toit.

### Résumé

Une idée à la base de l'invention est de proposer un dispositif de montage pour monter une installation photovoltaïque sur une charpente recouverte de tuiles qui permette, d'une part de limiter l'infiltration d'eau et de déchets à l'intérieur de la toiture et d'autre part, de compenser les tolérances de montage des tuiles de la toiture. De plus, le dispositif de montage est prévu pour faciliter le montage d'une installation photovoltaïque sur une toiture déjà en place.

Pour ce faire, selon un mode de réalisation, l'invention fournit un dispositif de montage comprenant :
- une tuile destinée à recouvrir la charpente et présentant un orifice de tuile ;
- une douille fixée à l'intérieur de l'orifice de tuile, ladite douille présentant une ouverture ;
- un organe d'ancrage destiné à ancrer l'installation photovoltaïque sur la charpente, l'organe d'ancrage passant à travers l'ouverture de la douille et étant, d'une part, destiné à être fixé à un support d'ancrage fixé à la charpente et, d'autre part, destiné à être fixé à l'installation photovoltaïque ;
- un couvercle recouvrant l'ouverture de la douille afin de la protéger, le couvercle étant muni d'un orifice de couvercle et étant fixé à l'organe d'ancrage qui traverse de manière étanche ledit orifice de couvercle, ledit couvercle étant placé à distance de la douille de manière à garantir une tolérance de positionnement de l'organe d'ancrage par rapport à la douille.

Ainsi, le dispositif montage permet de fixer l'installation photovoltaïque au travers de la toiture, via l'orifice de tuile, en venant s'ancrer sur la charpente à l'aide de l'organe d'ancrage.

Le couvercle permet d'empêcher les infiltrations d'eau et de déchets au travers de l'ouverture de la douille en venant la recouvrir. En outre, le couvercle n'étant pas fixé sur la douille et étant libre par rapport à celle-ci, le positionnement du dispositif de montage par rapport à la tuile accepte des inexactitudes sans que le couvercle n'exerce des contraintes mécaniques sur la douille.

Selon d'autres modes de réalisation avantageux, un tel dispositif de montage peut présenter une ou plusieurs des caractéristiques suivantes :
- Selon un mode de réalisation, la douille comprend une périphérie externe équipée d'au moins une butée configurée pour limiter l'enfoncement de la douille dans la tuile. Ainsi, la douille fait saillie de la tuile pour limiter l'infiltration de l'eau au travers de l'orifice de tuile, et la butée permet un montage plus aisé du dispositif en indiquant clairement où se situe l'épaisseur d'enfoncement de la douille.
- Selon un mode de réalisation, le couvercle comporte une paroi principale disposée en regard de l'ouverture de la douille et une jupe annulaire qui fait saillie de la paroi principale en direction de la tuile et qui est disposée autour de la douille. La combinaison de la jupe annulaire et de la paroi principale permettent de protéger de manière optimale la douille en recouvrant entièrement le dessus de la douille, ce qui a pour conséquence de diminuer les risques d'infiltration d'eau et/ou de déchets.
- Selon un mode de réalisation, la douille comprend une collerette annulaire faisant saillie radialement vers l'extérieur en direction de la jupe annulaire. La collerette annulaire ainsi placée permet de combler l'espace entre la douille et le couvercle au niveau de la jupe latérale ce qui permet à nouveau de diminuer les risques d'infiltration d'eau. La combinaison de la paroi principale, de la jupe annulaire ainsi que de la collerette permettent au dispositif d'éviter tout problème d'infiltration.
- Selon un mode de réalisation, le couvercle possède un axe de révolution et l'orifice de couvercle est excentré par rapport audit axe de révolution. Les principales tolérances de positionnement relatif de la tuile par rapport à l'organe étant dirigées selon une direction latérale qui est transversale à la direction de pente du toit, un orifice de couvercle excentré permet de positionner le couvercle soit avec l'orifice du couvercle latéralement à gauche de l'axe du couvercle, soit avec l'orifice du couvercle à droite de l'axe. Ainsi, ceci permet d'offrir une plus large plage de positionnement relatif de l'organe d'ancrage par rapport à la douille, selon la direction transversale, sans que le couvercle ne vienne en contact avec la douille et cela tout en conservant un diamètre de couvercle restreint.
- Selon un mode de réalisation, l'organe d'ancrage est un goujon présentant un filetage, le couvercle étant fixé sur le goujon au moyen d'au moins un écrou, de préférence au moyen de deux écrous qui sont montés sur le filetage dudit goujon et disposés respectivement de part et d'autre dudit couvercle.
- Selon un mode de réalisation, l'organe d'ancrage est fixé au support d'ancrage au moyen d'au moins un écrou, de préférence au moyen de deux écrous qui sont disposés respectivement de part et d'autre dudit support, de manière préférentielle de part et d'autre d'une partie supérieure du support d'ancrage.
- Selon un mode de réalisation, la douille est fixée par collage dans l'orifice de tuile. La colle a ainsi pour but de fixer la douille à la tuile mais aussi de former un joint entre ces deux éléments évitant ainsi tout problème d'étanchéité à ce niveau.
- Selon un mode de réalisation, la colle peut être une colle polyuréthane, une colle mastic, ou une colle de polyéthers modifiés silane, également appelée « MS polymère », ou tout autre type de colle permettant de coller la douille à la tuile.
- Selon un mode de réalisation, la douille est emmanchée en force dans l'orifice de tuile, de préférence, l'emmanchement en force joue également le rôle de joint d'étanchéité. De manière alternative, la douille est munie d'un joint de douille au niveau de l'emmanchement.
- Selon un mode de réalisation, le couvercle comporte un joint de couvercle au niveau de son orifice de manière à rendre étanche la liaison entre l'organe d'ancrage et le couvercle.
- Selon un mode de réalisation, le couvercle comporte sur sa paroi principale un renfoncement permettant d'y insérer le joint de couvercle.
- Selon un mode de réalisation, le joint de couvercle peut être un joint de forme annulaire, de préférence plat. Le joint peut être constitué d'une surface plane ou légèrement bombée d'épaisseur supérieure au renfoncement de telle sorte qu'après serrage il puisse s'écraser en gardant une épaisseur suffisante pour assurer l'étanchéité.
- Selon un mode de réalisation, la tuile peut être une tuile plate, une tuile canal, une tuile à emboitement ou à glissement, fortement ou faiblement galbée, ou une tuile à pureau plat.

Selon un aspect, l'invention concerne un ensemble de montage pour monter une installation photovoltaïque comportant une pluralité de dispositifs de montage précités destiné à être disposés à distance les uns des autres et un ou plusieurs supports d'ancrage destiné à être fixé à la charpente, chaque support d'ancrage étant fixée à une pluralité d'organes d'ancrage.

Ainsi, le support d'ancrage permet une meilleure adaptabilité en s'affranchissant d'un problème majeure. En effet, l'un des principaux problèmes lors du montage est de fixer le dispositif au chevron le plus proche, il faut donc que dans l'idéal le chevron se trouve juste en dessous du dispositif de montage. Cependant, l'invention tel que décrit permet de s'affranchir de ce problème d'alignement car le support d'ancrage est conçu pour se fixer à la charpente et à plusieurs organes d'ancrage sans pour autant que ceux-ci soient dans l'axe d'un chevron.

De préférence, le support d'ancrage est un élément profilé présentant une direction longitudinale qui est destinée à être disposée transversalement à la direction de la pente de la toiture. La disposition transversale du support permet de fixer au support les organes d'ancrage présents dans cet alignement.

Selon un mode de réalisation, le support d'ancrage comporte une partie inférieure destinée à être fixée à la charpente, une partie supérieure liée à l'organe d'ancrage et une partie intermédiaire permettant la jonction entre les parties inférieure et supérieure.

Selon un mode de réalisation, le support d'ancrage est de forme allongée et a une section en forme de S.

Selon un mode de réalisation, le support d'ancrage présente une section en forme de C.

Selon un mode de réalisation, le support d'ancrage comprend une partie inférieure destinée à être en contact avec la charpente en au moins un point, une partie supérieure destinée à servir de point de fixation avec au moins un organe d'ancrage et une partie intermédiaire reliant la partie supérieure à la partie inférieure.

Selon un mode de réalisation, la partie intermédiaire est composée de deux branches disposées de part et d'autre de la partie inférieure. La partie supérieure est composée de deux branches disposées sur chacune des branches de la partie intermédiaire, les branches de la partie supérieure étant dirigée l'une vers l'autre de manière sensiblement parallèle à la partie inférieure.

Selon un mode de réalisation, la partie inférieure, la partie supérieure et la partie intermédiaire délimitent un espace intérieur du support d'ancrage.

Selon un mode de réalisation, l'ensemble comprend un coulisseau fixé à l'un des organes d'ancrage, ledit coulisseau étant monté coulissant sur le support d'ancrage et étant équipé de moyens de serrage configurés pour autoriser le coulissement du coulisseau dans une position desserrée et pour fixer le coulisseau au support d'ancrage dans une position serrée.

Selon un mode de réalisation, le coulisseau comporte un élément supérieur de fixation et un élément inférieur de fixation formant les moyens de serrage et mobiles l'un par rapport à l'autre entre la position serrée dans laquelle ils serrent une partie du support d'ancrage et la position desserrée dans laquelle au moins l'un des éléments supérieur de fixation ou élément inférieur de fixation s'écarte de ladite partie du support d'ancrage.

Selon un mode de réalisation, dans la position serrée, le coulisseau est fixé à la partie supérieure du support d'ancrage.

Selon un mode de réalisation, l'élément inférieur de fixation est situé dans l'espace intérieur du support d'ancrage et est fixé à une extrémité inférieure de l'organe d'ancrage. L'élément supérieur de fixation est aligné avec l'élément inférieur de fixation dans la direction zénithale et est situé à l'extérieur de l'espace intérieur de manière à être traversé par l'organe d'ancrage.

Selon un mode de réalisation, dans la position serrée, l'organe d'ancrage est fixé à la partie supérieure du support d'ancrage par la prise en tenaille de la partie supérieure entre les éléments supérieur et inférieur de fixation.

Ainsi, le coulisseau permet de fixer un organe d'ancrage à un support d'ancrage sans avoir besoin d'orifice de fixation et en augmentant de manière importante l'adaptabilité de l'ensemble de montage. Avec la position desserrée coulissante du coulisseau, l'organe d'ancrage peut être fixé au support d'ancrage en le plaçant de manière optimale pour le serrage.

Selon un mode de réalisation le support d'ancrage comprend des orifices de support, de préférence de forme circulaire ou oblongue, ce qui permet au support d'être monté plus facilement et plus rapidement.

Selon un mode de réalisation, l'ensemble comprend au moins une platine de renfort, la platine de renfort comprenant un orifice configuré pour permettre à un support d'ancrage de traverser la platine de renfort, et une portion inférieure comportant des orifices de fixation configurés pour permettre la fixation à un élément de la charpente, par exemple à l'aide de dispositif de fixation de type vis.

Selon un mode de réalisation, la platine de renfort comprend une portion supérieure où est située l'orifice pour support d'ancrage et au moins deux ailes située de part et d'autre de la portion supérieure.

Selon un mode de réalisation, l'orifice pour support d'ancrage est de forme complémentaire à la forme en section du support d'ancrage.

Selon un mode de réalisation, les ailes sont orientées orthogonalement aux portions inférieure et supérieure. Les portions inférieure et supérieure sont de préférence sensiblement alignées l'une avec l'autre.

Selon un mode de réalisation, l'une ou les ailes comportent au moins un orifice de fixation configuré pour permettre la fixation à un élément de la charpente, par exemple à l'aide de dispositif de fixation de type vis.

Selon un mode de réalisation, la platine de renfort est configurée pour être fixée à un élément de la charpente dans la direction latérale à l'aide des orifices de fixation de la portion inférieure et dans une direction zénithale, orthogonale aux directions latérale et longitudinale, à l'aide des orifices de fixation des ailes.

Ainsi, la platine de renfort permet de fixer de manière fiable ou améliorer la fixation du support d'ancrage à la charpente.

Selon un mode de réalisation, l'ensemble comprend au moins une bride de fixation, la bride de fixation comprenant une partie centrale, au moins un flanc s'étendant orthogonalement à la partie centrale, un orifice traversant la partie centrale et l'au moins un flanc de manière à être configuré pour permettre au support d'ancrage de traverser la bride de fixation, et dans lequel la partie centrale comprend des orifices de fixation configurés pour permettre la fixation à un élément de charpente.

Selon un mode de réalisation, la bride de fixation comprend deux flancs situés de part et d'autre de la partie centrale dans une direction transversale.

Selon un mode de réalisation, l'orifice pour support d'ancrage est configuré pour traverser la bride de fixation dans la direction transversale.

Selon un mode de réalisation, la partie centrale comporte deux portions séparées par l'orifice pour support.

Selon un mode de réalisation, la bride de fixation est configurée pour être fixée à un élément de la charpente dans une direction zénithale, orthogonale aux directions transversale et longitudinale, à l'aide des orifices de fixation de la partie centrale.

Selon un mode de réalisation, l'ensemble comprend une pluralité de brides de fixation réparties sur une longueur du support d'ancrage, chaque bride de fixation étant configurée pour être fixée à un élément de charpente distinct.

Ainsi, grâce à la bride de fixation, le support d'ancrage est fixé de manière fiable à un élément de charpente, tout en en permettant de limiter l'encombrement du moyen de fixation du support d'ancrage sur la charpente. La bride de fixation permet par exemple de fixer un support d'ancrage sur une toiture équipée d'un écran de sous toiture grâce au fait que la bride de fixation vient se fixer sur une surface du dessus de la fermette ou du chevron.

Selon un mode de réalisation, les orifices de support se trouvent sur la partie supérieure et la partie inférieure du support d'ancrage, les orifices sur la partie supérieure étant destinés à être reliés à un organe d'ancrage, les orifices sur la partie inférieure étant destinés à être reliés à un chevron de la charpente. De préférence, les orifices de la partie inférieure et les orifices de la partie supérieure sont soit de forme circulaire, soit de forme oblongue, la forme oblongue étant dans le sens longitudinal du support.

Selon un aspect, l'invention concerne un système photovoltaïque comportant un ensemble de montage précité et une installation photovoltaïque qui est fixée à une pluralité d'organes d'ancrage.

Selon un aspect, l'invention concerne un procédé de montage d'un ensemble de montage précité sur une toiture comportant une charpente, dans lequel ledit procédé comprend les étapes suivantes :
- Fixer le ou les supports d'ancrage à la charpente ;
- Placer les tuiles munies d'orifice de tuile et de douilles fixées à l'intérieur de chacun des orifices de tuile ;
- Fixer les organes d'ancrage au ou aux supports d'ancrage au travers de chacune des ouvertures des douilles ;
- Fixer chacun des couvercles à chacun des organes d'ancrage respectif.

Selon un mode de réalisation, le ou les supports d'ancrage sont percés avant l'étape de fixation du ou des supports d'ancrage sur la charpente, de manière à former des orifices de support. De manière alternative, les orifices de support sont percés à l'étape de fixation des organes d'ancrage aux supports d'ancrages.

Selon un aspect, l'invention concerne un procédé de montage d'un ensemble de montage précité sur une toiture comportant des tuiles et une charpente, dans lequel ledit procédé comprend les étapes suivantes :
- Définir les positions des supports d'ancrage et les positions des tuiles munies d'orifice de tuile ;
- Retirer les tuiles dans les zones correspondant à ces positions ;
- Fixer le ou les supports d'ancrage à la charpente ;
- Placer les tuiles munies d'orifice de tuile et de douilles fixées dans les orifices;
- Fixer les organes d'ancrage au ou aux supports d'ancrage au travers de chacune des ouvertures des douilles ;
- Fixer chacun des couvercles à chacun des organes d'ancrage respectif.

Selon un aspect, l'invention concerne un ensemble de montage pour monter une installation photovoltaïque comportant une pluralité de dispositifs de montage, destinés à être disposés à distance les uns des autres, comprenant un organe d'ancrage destiné à ancrer l'installation photovoltaïque sur la charpente et étant, d'une part, destiné à être fixé à un support d'ancrage fixé à la charpente et, d'autre part, destiné à être fixé à l'installation photovoltaïque et l'ensemble comportant un ou plusieurs supports d'ancrage destiné à être fixé à la charpente, chaque support d'ancrage étant fixée à une pluralité d'organes d'ancrage.

Dans ce mode de réalisation, l'ensemble de montage n'est pas nécessairement lié aux caractéristiques du dispositif de montage précité.

### Brève description des figures

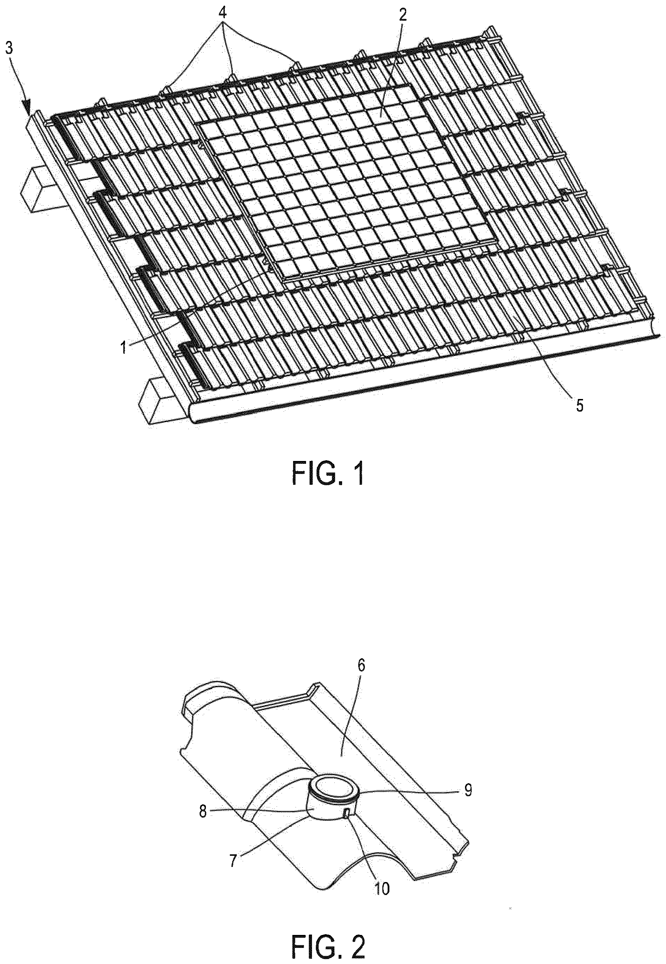

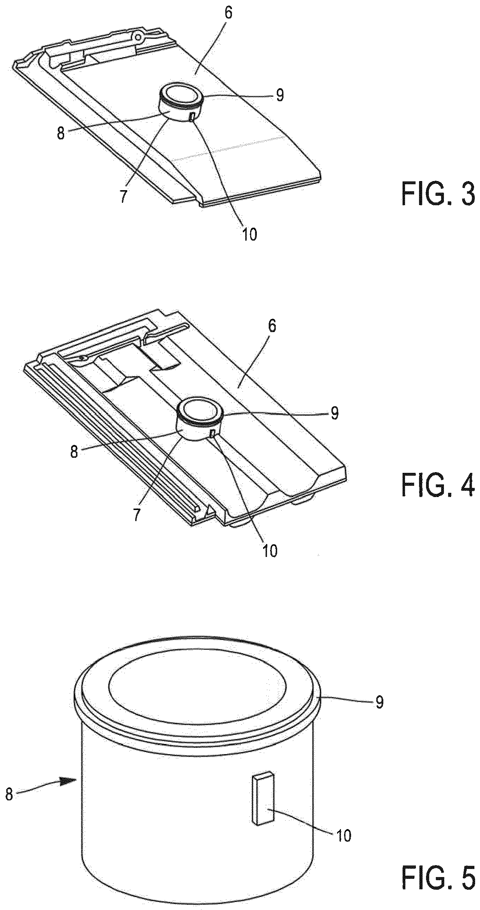

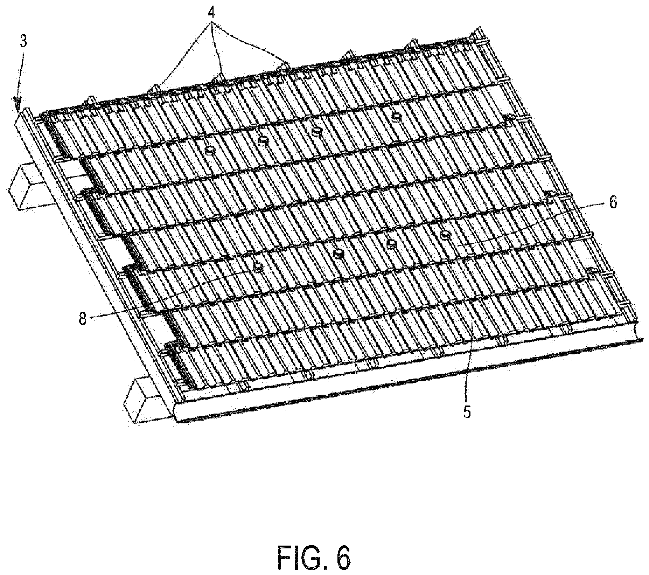

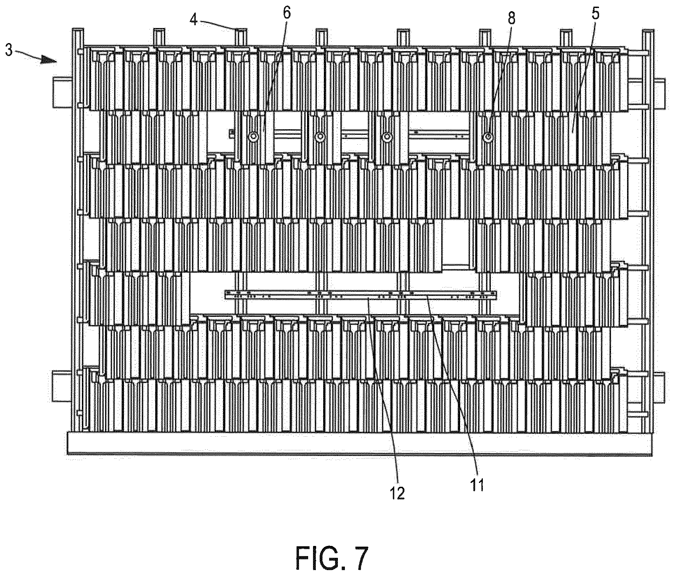

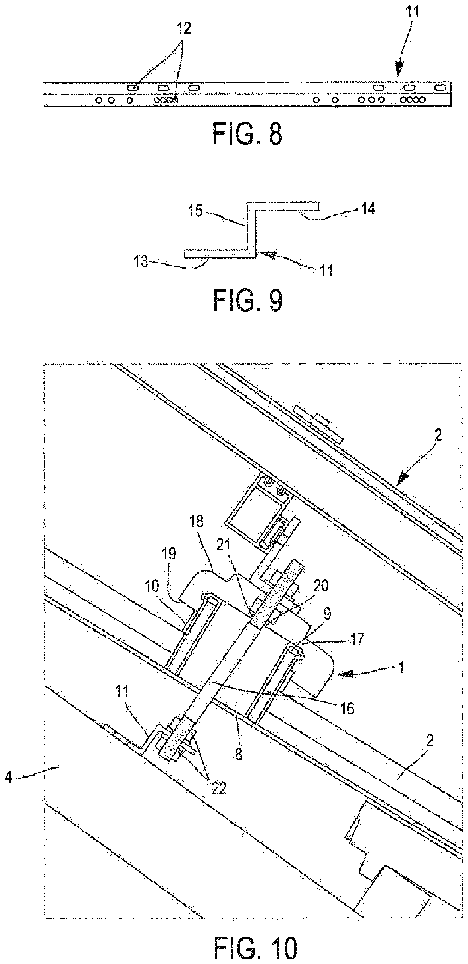

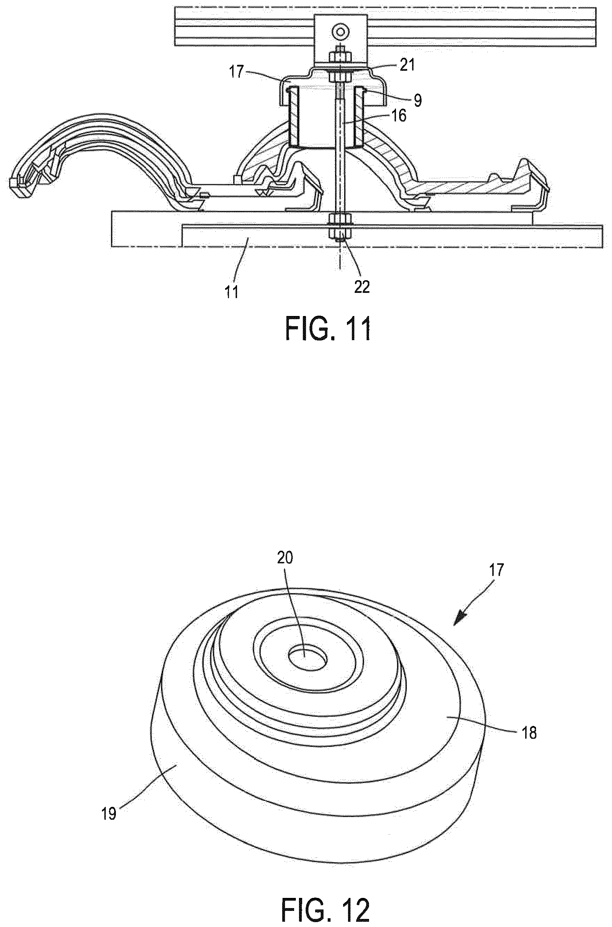

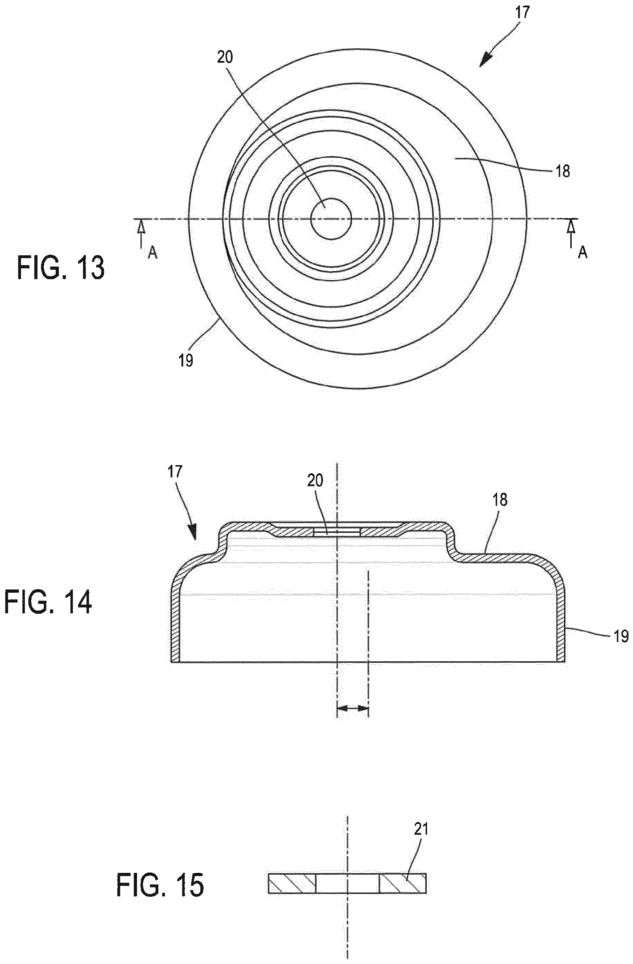

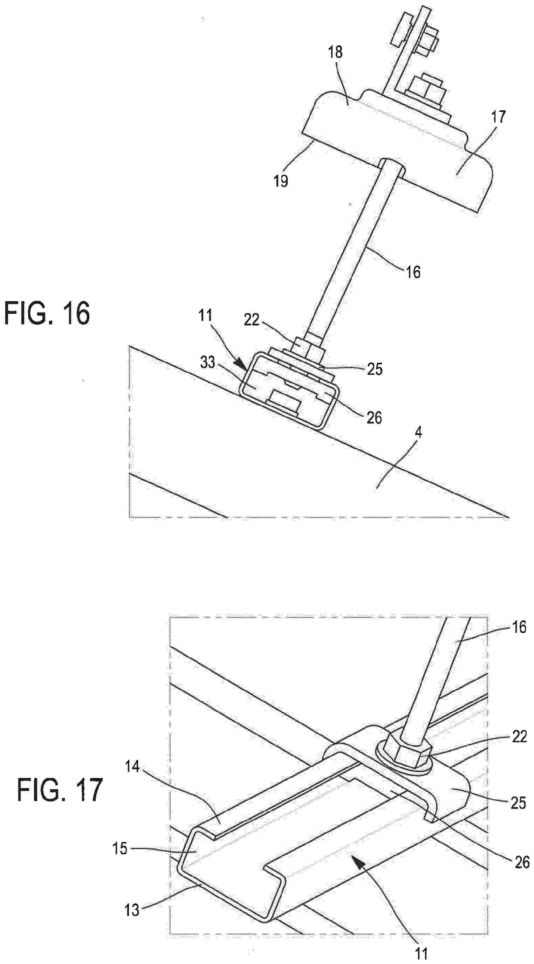

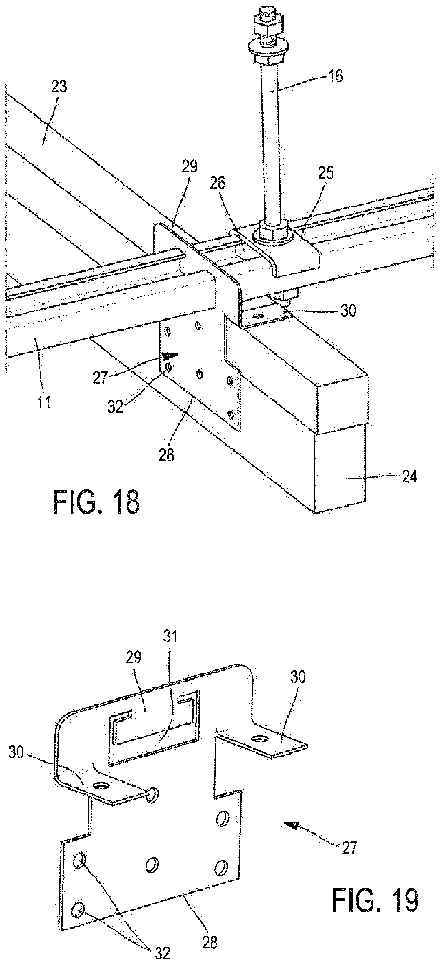

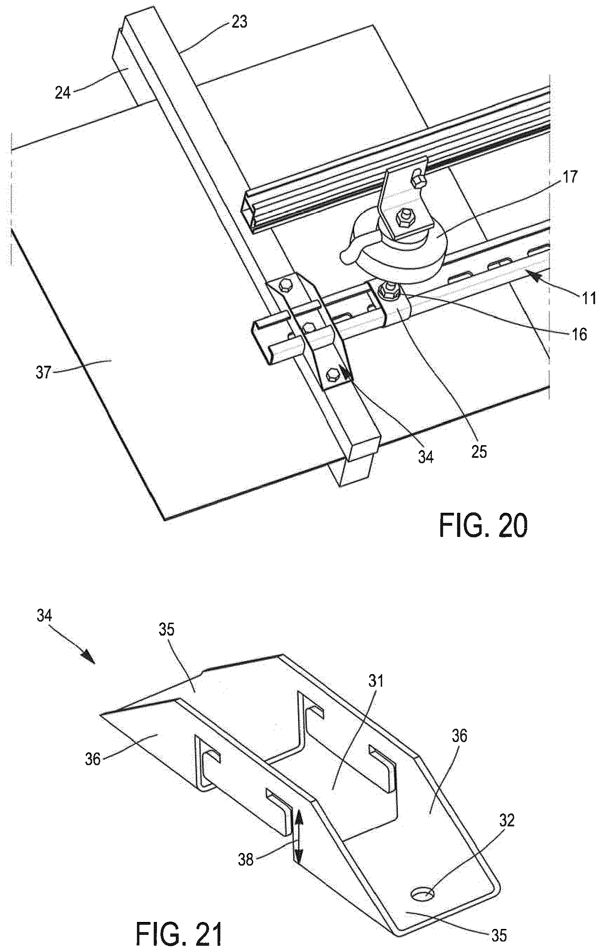

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue en perspective d'un système photovoltaïque monté sur une toiture.
- **La** **figure 2** est une vue en perspective d'un premier type de tuile munie d'un orifice avec une douille fixée dans l'orifice.
- **La** **figure 3** est une vue en perspective d'un deuxième type de tuile munie d'un orifice avec une douille fixée dans l'orifice.
- **La** **figure 4** est une vue en perspective d'un troisième type de tuile munie d'un orifice avec une douille fixée dans l'orifice.
- **La** **figure 5** est une vue en perspective d'une douille munie d'une collerette et d'au moins une butée.
- **La** **figure 6** est une vue en perspective d'une toiture composée de tuiles sans orifice et de tuiles munie d'un orifice avec une douille fixée dans l'orifice.
- **La** **figure 7** est une vue de dessus d'une toiture.
- **La** **figure 8** est une vue partielle d'un support d'ancrage.
- **La** **figure 9** est une vue du profil d'un support d'ancrage
- **La** **figure 10** est une vue en coupe selon un plan longitudinal d'un dispositif de montage relié à la charpente et à une installation photovoltaïque.
- **La** **figure 11** est une vue en coupe selon un plan latéral d'un dispositif de montage relié à la charpente et à une installation photovoltaïque en se plaçant dans la direction longitudinale.
- **La** **figure 12** est une vue en perspective d'un couvercle.
- **La** **figure 13** est une vue de dessus d'un couvercle
- **La** **figure 14** est une vue en coupe du couvercle selon un plan de coupe A-A.
- **La** **figure 15** **est** une vue en coupe d'un joint de couvercle selon un mode de réalisation.
- **La** **figure 16** représente une vue de côté d'une partie d'un dispositif de montage fixé à un support d'ancrage selon un deuxième mode de réalisation.
- **La** **figure 17** représente une vue détaillée en perspective du support d'ancrage selon le deuxième mode de réalisation fixé avec le dispositif de montage.
- **La** **figure 18** est une vue en perspective du support d'ancrage selon le deuxième mode de réalisation fixé à la charpente à l'aide d'une platine de renfort.
- **La** **figure 19** représente une vue en perspective de la platine de renfort selon un mode de réalisation.
- **La** **figure 20** est une vue en perspective du support d'ancrage selon le deuxième mode de réalisation fixé à la charpente à l'aide d'une bride de fixation.
- **La** **figure 21** représente une vue en perspective de la bride de fixation.

### Description détaillée de modes de réalisation

Dans la description et les revendications, le terme « direction longitudinale » signifie dans la direction de la pente de toiture et les termes « direction latérale »et « direction transversale » sont synonymes et signifient dans la direction orthogonale à la pente de toiture et dans le plan de la toiture. Le terme « direction zénithale » signifie une direction orthogonale au plan de la toiture, c'est-à-dire orthogonale à la direction transversale et à la direction longitudinale.

La figure 1 représente un système photovoltaïque monté en surélévation sur une toiture. Le système photovoltaïque est composé d'une installation photovoltaïque 2 et de plusieurs dispositifs de montage 1. Les dispositifs de montage 1 sont conçus pour maintenir en position l'installation photovoltaïque 2 en étant fixés d'une part à différentes positions de l'installation photovoltaïque et d'autre part à une charpente 3 d'une toiture. La charpente 3 de la toiture est notamment composée de liteaux qui s'étendent selon la direction latérale et de chevrons 4 qui s'étendent selon la direction longitudinale et qui servent de points d'ancrages aux dispositifs de montage 1. La charpente 3 est recouverte de tuiles 5 sur toute sa surface. Les formats des tuiles permettent une densité de couverture pouvant aller de 60 tuiles par mètre carré (petits formats) à 5 tuiles par mètre carré (grands formats). Les tuiles sont posées sur les liteaux, eux même posés sur les chevrons et pannes traditionnelles ou fermettes industrielles. Les entraxes entre chevrons ou fermettes dépendent du dimensionnement structurel de la charpente variant en fonction du type de tuile, de sa pente, de sa situation géographique liée aux charges de vent et de neige. Pour garantir une étanchéité à l'eau les tuiles peuvent être disposées alignées ou décalées suivant la direction longitudinale (sens rampant). Les dispositifs de montage 1 sont conçus pour comprendre chacun une tuile 6 qui est munie d'un orifice de tuile 7 permettant de venir s'ancrer sur les chevrons 4.

Le système photovoltaïque de ce mode de réalisation qui est donc fixé en surélévation permet d'éviter d'avoir une grande longueur de joint tout autour de l'installation comme ce qui se fait dans le montage intégré à la toiture et qui était responsable des problèmes d'étanchéité des systèmes photovoltaïques. Dans un montage en surélévation, les problèmes d'étanchéité ou d'infiltration d'eau peuvent survenir au niveau des dispositifs de montage 1 car ceux-ci sont directement liés à la toiture. C'est pourquoi l'invention ici présentée vise à résoudre ce problème en fournissant des dispositifs de montage 1 permettant de limiter fortement et durablement les risques d'infiltration d'eau. De plus, de manière à faciliter le montage du système photovoltaïque et à éviter des concentrations de contraintes sur les tuiles 6 munies d'orifice de tuile 7, les dispositifs de montage 1 sont conçus pour comprendre des moyens permettant une plus grande tolérance de montage évitant ainsi tout problème lors du montage du système photovoltaïque.

Les figures 2 à 4 représentent trois types de tuiles 6 munies d'un orifice de tuile 7 permettant à un dispositif de montage 1 de s'ancrer à un chevron 4 de la charpente 3. Le dispositif de montage 1 comprend une douille 8 qui est fixée à l'intérieur de l'orifice de tuile 7, cette douille 8 présentant une ouverture. La douille 8 est également munie d'une collerette 9 annulaire faisant saillie radialement vers l'extérieur.

La douille 8 comporte également d'une périphérie externe équipée d'au moins une butée 10 et de préférence d'au moins deux butées 10. Chaque butée 10 est constituée par une protubérance faisant saillie radialement vers l'extérieur depuis la périphérie externe de la douille et est destinée à venir en butée contre la pourtour de l'orifice de tuile 7. Chaque butée est ainsi configurée pour limiter l'enfoncement de la douille 8 dans la tuile 6. Dans un mode de réalisation, les deux butées 10 sont diamétralement opposées de part et d'autre de la périphérie externe de la douille 8.

Cette limitation de l'enfoncement permet à la douille 8 de faire saillie de la tuile 6 de manière suffisante pour limiter l'infiltration d'eau à travers l'orifice de tuile 7 lors de l'écoulement d'eau sur la toiture.

Dans le mode de réalisation présenté sur les figures, l'orifice de tuile 7 se trouve au centre de la tuile 6. Il peut être envisagé dans une variante de réalisation que l'orifice de tuile 7 soit décalé par rapport au centre pour faire varier de manière plus fine la distance entre deux dispositifs de montage 1 permettant ainsi de faciliter le montage de l'installation photovoltaïque 2.

Comme représenté sur la figure 5, la douille 8 est selon un mode de réalisation de forme cylindrique. La douille présente une ouverture de manière à pouvoir laisser un élément traverser la douille 8 le long de son axe de révolution. Chaque butée 10 est équipée sur la périphérie externe de la douille 8, de préférence l'au moins une butée 10 se trouve à mi-hauteur de la douille. Selon un mode de réalisation, l'au moins une butée 10 est de forme rectangulaire, de préférence sa forme rectangulaire ayant sa plus grande longueur dans la direction de l'axe de révolution de la douille.

La figure 6 représente une charpente 3 de toiture munie notamment de chevrons 4 dont la surface est recouverte à la fois de tuiles 5 standards et de tuiles 6 spécifiques. Les tuiles 6 spécifiques sont munies d'orifices de tuile 7, les douilles 8 étant fixées à l'intérieur des orifices de tuile 7. Comme on peut le voir distinctement sur la figure 6, la douille 8 fait saillie de la toiture permettant ainsi de ne plus avoir d'orifices de tuile 7 à la même hauteur que l'écoulement d'eau sur une toiture évitant ainsi tout risque d'infiltration.

Selon un mode de réalisation, la douille 8 est fixée par collage dans l'orifice de tuile 7 de manière à rendre la liaison entre ces deux éléments plus robuste et éviter toute désolidarisation intempestive mais également afin d'éviter que l'eau ne s'infiltre directement entre la tuile 6 et la douille 8. En effet, la colle joue aussi un rôle d'étanchéité au niveau de la liaison entre la douille 8 et l'orifice de tuile 7. De préférence, la colle utilisée est une colle de type souple. En particulier, la colle est choisie parmi : une colle polyuréthane, une colle mastic ou une colle de polyéthers modifiés silane, également appelée « MS polymère ». Ces différents types de colle ont l'avantage d'être faciles d'utilisation, d'être adaptées aux conditions extérieures, par exemple les variations de température et l'humidité, et d'être adaptables pour fixer différents types de matériaux.

La figure 7 représente une charpente 3 de toiture où certaines tuiles ont été retirées pour visualiser un élément, à savoir un support d'ancrage 11 qui permet la fixation d'un dispositif de montage 1 à au moins un chevron 4 de la charpente 3. Dans un mode de réalisation, le support d'ancrage 11 est de forme allongée dont la longueur est dans la direction latérale de la pente de toiture. Cette disposition du support d'ancrage 11 permet de fixer un élément du dispositif de montage 1 présent dans cet alignement, même si cet élément n'est pas directement dans l'alignement d'un chevron. En effet, lors de la fixation des dispositifs de montage 1, le placement des dispositifs de montage 1 dans la direction longitudinale de la pente de toiture est connu car il correspond à la rangée de tuile. Cependant, le placement dans la direction latérale est plus complexe car il est nécessaire qu'un dispositif de montage 1 se trouve dans l'alignement d'un chevron 4 pour pouvoir s'y ancrer. Or, dans la présente invention, le support d'ancrage 11 permet de s'affranchir de cette difficulté en permettant un non-alignement entre un dispositif de montage 1 et un chevron 3 grâce à sa forme allongée et sa disposition qui est dans la direction latérale. De plus, sa forme allongée peut permettre également de relier plusieurs dispositifs de montage 1 sur une même rangé de tuile à un même support d'ancrage 11. De préférence, le support d'ancrage 11 est pré-percé avant son montage sur la charpente 3 formant ainsi des orifices de support 12, le pré-perçage ayant pour finalité de faciliter le montage d'un support d'ancrage 11.

Sur les figures 8 et 9, il est représenté un mode réalisation d'un support d'ancrage 11 isolé. Dans ce mode de réalisation, le support d'ancrage 11 est un élément profilé de forme allongé. Le support d'ancrage 11 comporte une partie inférieure 13 destinée à être fixée à la charpente 3, notamment à au moins un chevron 4, une partie supérieure 14 liée à un élément du dispositif de montage 1 et une partie intermédiaire 15 permettant la jonction entre les parties inférieure 13 et supérieure 14. De manière préférentielle, le support d'ancrage a une section en forme de S comme on peut le voir sur la figure 9 ce qui permet de faciliter le montage en décalant latéralement la partie supérieure de la partie inférieure afin de faciliter le montage sur la charpente et avec chacun des dispositifs de montage. De plus, la partie supérieure 14 est, dans cette configuration, plus haute par rapport à la charpente 3 que la partie inférieure 13 permettant ainsi de faciliter la liaison entre le support d'ancrage 11 et un élément du dispositif de montage 1. Selon un mode de réalisation où le support d'ancrage 11 est pré-percé, il comprend donc des orifices de support 12, de préférence de forme circulaire ou oblongue. De manière préférentielle, les orifices de support 12 sur la partie inférieure 13 et les orifices de support 12 sur la partie supérieure 14 sont de forme circulaire ou de forme oblongue, la forme oblongue étant dans le sens longitudinal du support et permettant d'augmenter la tolérance de montage.

Les figures 10 et 11 représentent un dispositif de montage 1 relié à un chevron 4 de la charpente 3 et également relié à une installation photovoltaïque 2. Le dispositif de montage 1 est destiné à être monté à un support d'ancrage 11 qui est directement fixé à au moins un chevron 4 de la charpente 3, par exemple à l'aide d'un élément de fixation de type vis, de manière préférentielle la partie inférieure 13 du support d'ancrage 11 est fixée à au moins deux chevrons 4. Le support d'ancrage 11, de préférence la partie supérieure 14, est relié à un organe d'ancrage 16. Dans un mode de réalisation, l'organe d'ancrage 16 est un goujon. De plus, l'organe d'ancrage 16 est fixé au support d'ancrage 11 au moyen de deux écrous 22 qui sont disposés respectivement de part et d'autre de la partie supérieure 14 dudit support d'ancrage 11. De manière alternative, l'organe d'ancrage 16 est fixé au support d'ancrage avec un unique écrou 22. L'organe d'ancrage est situé à l'intérieur de l'ouverture de la douille 8 qui est elle-même fixée à l'orifice de tuile 7 de la tuile 6. L'organe d'ancrage 16 passe au travers de l'ouverture de la douille 8.

L'organe d'ancrage 16 est également relié à un couvercle 17. Le couvercle 17 est configuré pour recouvrir l'ouverture de la douille 8 afin de la protéger et également d'éviter que l'eau et/ou des déchets, tels que des feuilles ne s'infiltrent au travers de l'ouverture de la douille 8. Le couvercle 17 est muni d'un orifice de couvercle 20 et l'organe d'ancrage traverse de manière étanche l'orifice de couvercle 20, à l'aide par exemple d'un joint de couvercle 21. Le couvercle 17 est placé à distance de la douille 8 de manière à garantir une tolérance de positionnement de l'organe d'ancrage 16 par rapport à la douille 8. Le couvercle 17 comporte une paroi principale 18 disposée en regard de l'ouverture de la douille 8. Le couvercle 17 comporte également une jupe annulaire 19 qui fait saillie de la paroi principale 18 en direction de la tuile 6 et qui est disposée autour de la douille 8. La combinaison de la jupe annulaire 19 et de la paroi principale 18 permettent de protéger de manière optimale la douille 8 en recouvrant entièrement le dessus de la douille 8, ce qui a pour conséquence de diminuer les risques d'infiltration d'eau. De plus, la collerette 9 annulaire de la douille 8 faisant saillie radialement vers l'extérieur en direction de la jupe annulaire 19 permet de diminuer le jeu entre la douille 8 et le couvercle 17 au niveau de la jupe latérale 19 ce qui a pour conséquence de diminuer les risques d'infiltration d'eau. Le joint de couvercle 21 est situé dans un renfoncement de la paroi principale 18 du couvercle 17 et est de forme plate dont l'épaisseur est supérieure au renfoncement de telle sorte qu'après fixation du couvercle 17 avec l'organe d'ancrage 16, le joint remplit son rôle d'étanchéité. La combinaison de la paroi principale 18 équipée du joint 21, de la jupe annulaire 19 ainsi que de la collerette 9 permettent au dispositif de montage 1 d'éviter tout problème d'infiltration. Le couvercle est fixé sur l'organe d'ancrage 16 au moyen d'au moins un écrou 22, de préférence de deux écrous qui sont montés sur l'organe d'ancrage 16 et disposés respectivement de part et d'autre dudit couvercle 17. Le jeu entre la collerette 9 et le couvercle 17 est supérieur ou égal à 4mm.

L'organe d'ancrage 16 est ensuite relié à l'installation photovoltaïque par l'intermédiaire d'une bride. La bride est fixée au dispositif de montage 1 en étant serrée sur l'organe d'ancrage 16 entre un écrou 22 et le couvercle 17. La bride est ensuite reliée à un rail qui est lié à un cadre de l'installation photovoltaïque 2.

Les figures 12 à 14 représentent un mode réalisation d'un couvercle 17 isolé des autres éléments constitutifs d'un dispositif de montage 1. Comme dit précédemment, le couvercle 17 comporte une paroi principale 18 et une jupe annulaire 19. De plus, dans ce mode de réalisation, le couvercle 17 possède un axe de révolution et l'orifice de couvercle 20 est excentrée par rapport audit axe de révolution. L'orifice de couvercle 20 excentré permet au dispositif de montage 1 d'être plus facile à monter. En effet, en se plaçant dans la direction latérale, le couvercle 17 a donc deux positions possibles, l'orifice à gauche de l'axe du couvercle ou à droite. Ces deux positions permettent au dispositif de pouvoir rattraper des tolérances de montage.

La figure 15 représente un mode de réalisation d'un joint de couvercle 21. Dans ce mode de réalisation, le joint de couvercle 21 est un joint plat de forme annulaire. Le joint 21 est destiné à être inséré dans le renfoncement de la paroi principale 18 du couvercle 17.

Les figures 16 et 17 représentent un deuxième mode de réalisation du support d'ancrage 11 qui est fixé à une charpente 3 traditionnelle constituée de chevrons 4 ayant une section conséquente, un organe d'ancrage 16 du dispositif de montage 1 étant lié au support d'ancrage 11. Pour des raisons de lisibilité, la tuile munie d'un orifice 6 et la douille 8 ne sont pas représentées sur ces figures.

Comme dans le mode de réalisation des figures 8 et 9, le support d'ancrage 11 est un élément profilé de forme allongé comportant une partie inférieur 13 destinée à être fixée à un ou plusieurs chevrons 4, une partie supérieur 14 liée à un élément du dispositif de montage 1 et une partie intermédiaire 15 permettant la jonction entre les parties inférieure 13 et supérieure 14. La section des chevrons 4 étant de dimensions suffisantes, le support d'ancrage 11 est fixé directement par sa partie inférieure 13 à un ou plusieurs chevrons, par exemple à l'aide d'une vis.

Dans le mode de réalisation des figures 16 et 17, la partie intermédiaire 15 est composée de deux branches disposées de part et d'autre de la partie inférieure 13. La partie supérieure 14 est également composée de deux branches disposées sur chacune des branches de la partie intermédiaire 15, les branches de la partie supérieure 14 étant dirigée l'une vers l'autre de manière sensiblement parallèle à la partie inférieure 13. La partie inférieure 13, la partie supérieure 14 et la partie intermédiaire 15 délimitent de ce fait un espace intérieur 33 du support d'ancrage 11. Comme on peut le voir sur les figures 16 et 17, le support d'ancrage a de ce fait une section en forme de C. Plus particulièrement, le support d'ancrage 11 peut avoir une section dite rectangulaire en forme de C lorsque la dimension en section des branches de la partie intermédiaire 15 est inférieure à la dimension en section de la partie inférieure 13. Le support d'ancrage peut également avoir une section dite carrée en forme de C lorsque la dimension en section des branches de la partie intermédiaire 15 est égale à la dimension en section de la partie inférieure 13.

L'organe d'ancrage 16 du dispositif de montage 1 est fixé au support d'ancrage 11 à l'aide d'un élément supérieur de fixation 25 et d'un élément inférieur de fixation 26. En effet, comme on peut le voir figures 16 et 17, l'élément inférieur de fixation 26 est logé dans l'espace intérieur 33 du support d'ancrage 11 et est fixé à l'extrémité inférieure de l'organe d'ancrage 16, par exemple par vissage. L'élément supérieur de fixation 25 est aligné avec l'élément inférieur de fixation 26 dans la direction zénithale et est situé à l'extérieur de l'espace intérieur 33 de manière à être traversé par l'organe d'ancrage 16. De cette manière, les éléments inférieur et supérieur de fixation 25, 26 se trouvent de part et d'autre de la partie supérieure 14 du support d'ancrage 11. Un écrou 22 placé sur l'organe d'ancrage 16 vient alors plaquer à l'aide de l'effort de serrage de l'écrou 22 sur l'organe d'ancrage 16 l'élément supérieur de fixation 25 contre la partie supérieure 14 du support d'ancrage 11. Ainsi, l'organe d'ancrage 16 est fixé au support d'ancrage 11 par la prise en tenaille de la partie supérieure entre les éléments supérieur et inférieur de fixation 25, 26.

La figure 18 représente le deuxième mode de réalisation du support d'ancrage 11 qui est cette fois fixé à une charpente 3 industrielle constituée de fermettes 24 de faible largeur ainsi que de contrelattes 23. Contrairement aux chevrons 4 d'une charpente 3 traditionnelle, les fermettes 24 ne permettent pas de par leur dimension de fixer convenablement et directement le support d'ancrage 11. Dans ce cas, il parait avantageux d'utiliser une platine de renfort 27 permettant de lier la contrelatte 23 et la fermette 24 au support d'ancrage 11.

Comme on peut le voir notamment sur la figure 19, la platine de renfort 27 comprend une portion inférieure 28, une portion supérieure 29 et deux ailes 30 situées de part et d'autre de la portion supérieure 29. Les ailes 30 sont conçues de manière à être orientées orthogonalement aux portions inférieure et supérieure 28, 29. Les ailes 30 et la portion inférieure 28 sont pourvues d'orifices de fixation 32. La portion supérieure 29 est quant à elle pourvue d'un orifice 31 de forme complémentaire à la forme en section du support d'ancrage 11 de manière à ce que le support d'ancrage 11 puisse être introduit dans l'orifice 31. De cette façon une partie de la portion supérieure 29 se trouve loger dans l'espace intérieur 33 du support d'ancrage 11 lorsque la platine de renfort 27 est en position de montage.

Comme on peut le voir sur la figure 18, de manière à fixer ou améliorer la fixation du le support d'ancrage 11 à une fermette 24 et une contrelatte 23, la platine de renfort 27 est insérée sur le support d'ancrage 11 via l'orifice 31. De cette manière, la portion inférieure 28 est ainsi plaquée contre la fermette 24 et la contrelatte dans la direction latérale et les ailes 30 viennent se placer au-dessus de la contrelatte 23 de part et d'autre du support d'ancrage 11. A l'aide de dispositifs de fixation comme par exemple des vis, la portion inférieure 28 est fixée à la fermette 24 et la contrelatte 23 en introduisant les dispositifs de fixation dans les orifices de fixation 32 et les ailes 30 sont fixés à la contrelatte 23. Ainsi, la platine de renfort 27 entoure le support d'ancrage 11 à l'aide de sa forme complémentaire de l'orifice 31 et vient se fixer solidement à la fermette 24 et la contrelatte 23 dans de multiples directions de manière à fixer de manière fiable ou améliorer la fixation du support d'ancrage 11 à la charpente 3.

La figure 20 représente le deuxième mode de réalisation du support d'ancrage 11 qui est cette fois fixé à une charpente 3 traditionnelle constituée de chevrons ou de fermettes 24 ainsi que de contrelattes 23 situées au-dessus de chaque fermette/chevron, la charpente 3 étant également munie d'un écran de sous toiture 37 s'étendant dans la charpente 3. L'écran de sous toiture 37 est fixé de manière à être pris en sandwich entre la fermette/chevron 24 et la contrelatte 23, comme représenté sur la figure 20. Contrairement au mode présenté en figure 18, l'écran de sous toiture 37 ne permet pas l'utilisation des platines de renfort des figures 18 et 19 car celles-ci ne peuvent pas être placés sur le côté de la fermette 23 et de la contrelatte 24. Dans ce cas, il parait avantageux d'utiliser une bride de fixation 34 permettant de lier la fermette 24 au support d'ancrage 11.

Comme on peut le voir notamment sur la figure 21, la bride de fixation 34 comprend une partie centrale 35 et deux flancs 36 situés de part et d'autre de la partie centrale 35. Les flancs 36 s'étendent orthogonalement à la partie centrale 35 dans la même direction, de manière à former une bride de fixation 34 à section en U. La partie centrale 35 est pourvue d'orifices de fixation 32. La bride de fixation 34 est également pourvue d'un orifice 31 de forme complémentaire à la forme en section du support d'ancrage 11, l'orifice 31 traversant les flancs 36 et la partie centrale 35 dans la direction transversale de la bride de fixation 34, de manière à ce que le support d'ancrage 11 puisse être introduit dans l'orifice 31. De cette façon, une partie de chaque flanc 36 se trouve loger dans l'espace intérieur 33 du support d'ancrage 11 lorsque la bride de fixation 34 est en position de montage. L'orifice 31 sépare alors en deux portions la partie centrale 35. Chacune des portions de la partie centrale 35 est munie d'orifices de fixation 32.

Comme on peut le voir sur la figure 20, de manière à fixer ou améliorer la fixation du support d'ancrage 11 à une fermette 24, la bride de fixation 34 est insérée sur le support d'ancrage 11 via l'orifice 31. De cette manière, la partie centrale 35 est ainsi plaquée contre la fermette 24 dans la direction zénithale et les flancs 36 sont ainsi situés perpendiculairement au support d'ancrage 11. A l'aide de dispositifs de fixation comme par exemple des vis, la partie centrale 35 est fixée à la fermette 24 en introduisant les dispositifs de fixation dans les orifices de fixation 32. Ainsi, la bride de fixation 34 entoure le support d'ancrage 11 à l'aide de sa forme complémentaire de l'orifice 31 et vient se fixer solidement à la fermette 24 de manière à fixer de manière fiable ou améliorer la fixation du support d'ancrage 11 à la charpente 3 et à empêcher toute rotation du support d'ancrage 11.

De plus, la hauteur 38 de l'orifice 31 est inférieure à la hauteur du support d'ancrage 11, par exemple de l'ordre de 1 mm, de manière à ce que le support d'ancrage 11 dépasse légèrement de la bride de fixation 34 dans la direction zénithale après insertion de la bride de fixation 34 dans le support d'ancrage 11. De cette manière, lors de la fixation de la bride de fixation 34 à un élément de charpente, le support d'ancrage 11 est plaqué contre l'élément de charpente tout en étant compressé par la bride de fixation 34 vers l'élément de charpente. Ainsi, le support d'ancrage 11 est pris en sandwich par l'élément de charpente et la bride de fixation 34 en limitant le jeu au maximum entre ceux-ci pour éviter toute rotation du support d'ancrage 11.

Par exemple pour un espacement entre les fermettes 24 d'une charpente de l'ordre de 60 cm, il est prévu d'utiliser un support d'ancrage 11 de longueur 2 m fixé aux fermettes 24 à l'aide de quatre brides de fixation 34, chaque bride de fixation 34 étant placée sur une fermette 24 différente. Ainsi, le support d'ancrage 11 est solidement fixé aux fermettes 24 sur toute sa longueur évitant ainsi d'avoir une portion de celui-ci en porte-à-faux et évitant également toute phénomène de rotation du support d'ancrage 11.

Sur une toiture en construction, le système photovoltaïque, composé d'une installation photovoltaïque 2, d'une pluralité de dispositifs de montage 1 et d'une pluralité de supports d'ancrage 11, est monté tout d'abord en fixant les supports d'ancrage 11 à la charpente 3, à l'aide ou non de platines de renfort 27 et/ou de brides de fixation 34, puis en plaçant les tuiles 6 munies d'orifice de tuile 7, des douilles 8 étant préalablement fixées dans les orifices de tuiles 7, puis de fixer les organes d'ancrage 16 aux supports d'ancrage 11 au travers de chacune des ouvertures des douilles 8 et enfin de fixer chacun des couvercles 17 à chacun des organes d'ancrage 16 respectif. De préférence, les supports d'ancrage 11 sont percés avant l'étape de fixation des supports d'ancrage 11 sur la charpente 3, de manière à former des orifices de support 12. Ce perçage avant l'installation sur la charpente permet de diminuer le temps de montage sur la toiture.

Lors d'une rénovation de toiture pour y installer un système photovoltaïque, il est nécessaire tout d'abord de retirer une partie des tuiles 5 pour pouvoir fixer sur la charpente 3, les supports d'ancrage 11, puis de réaliser les même étapes que lors d'une construction de toiture.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif de montage (1) pour monter une installation photovoltaïque (2) sur une charpente (3) recouverte de tuiles (5), le dispositif de montage comprenant :
- une tuile (6) destinée à recouvrir la charpente et présentant un orifice de tuile (7) ;
- une douille (8) fixée à l'intérieur de l'orifice de tuile (7), ladite douille (8) présentant une ouverture ;
- un organe d'ancrage (16) destiné à ancrer l'installation photovoltaïque (2) sur la charpente (3), l'organe d'ancrage (16) passant à travers l'ouverture de la douille (8) et étant, d'une part, destiné à être fixé à un support d'ancrage (11) fixé à la charpente (3) et, d'autre part, destiné à être fixé à l'installation photovoltaïque (2) ;
- un couvercle (17) recouvrant l'ouverture de la douille afin de la protéger, le couvercle (17) étant muni d'un orifice de couvercle (20) et étant fixé à l'organe d'ancrage (16) qui traverse de manière étanche ledit orifice de couvercle (20), ledit couvercle (17) étant placé à distance de la douille (8) de manière à garantir une tolérance de positionnement de l'organe d'ancrage (16) par rapport à la douille (8) dans lequel le couvercle (17) possède un axe de révolution et l'orifice de couvercle (20) est excentré par rapport audit axe de révolution, et le couvercle (17) comporte un joint de couvercle (21) au niveau de son orifice (20) de manière à rendre étanche la liaison entre l'organe d'ancrage (16) et le couvercle (17).

2. Dispositif de montage (1) selon la revendication 1 dans lequel la douille (8) comprend une périphérie externe équipée d'au moins une butée (10) configurée pour limiter l'enfoncement de la douille (8) dans la tuile (6).

3. Dispositif de montage (1) selon l'une quelconque des revendications précédentes, dans lequel le couvercle (17) comporte une paroi principale (18) disposée en regard de l'ouverture de la douille (8) et une jupe annulaire (19) qui fait saillie de la paroi principale (18) en direction de la tuile (6) et qui est disposée autour de la douille (8).

4. Dispositif de montage (1) selon la revendication 3, dans lequel la douille (8) comprend une collerette (9) annulaire faisant saillie radialement vers l'extérieur en direction de la jupe annulaire (19).

5. Dispositif de montage (1) selon l'une quelconque des revendications précédentes, dans lequel l'organe d'ancrage (16) est un goujon présentant un filetage, le couvercle (17) étant fixé sur le goujon au moyen d'au moins deux écrous (22) qui sont montés sur le filetage dudit goujon (16) et disposés respectivement de part et d'autre dudit couvercle (17).

6. Dispositif de montage (1) selon l'une quelconque des revendications précédentes, dans lequel la douille (8) est fixée par collage dans l'orifice de tuile (7).

7. Ensemble de montage pour monter une installation photovoltaïque (2) comportant une pluralité de dispositifs de montage (1) selon l'une quelconque des revendications 1 à 6 destiné à être disposés à distance les uns des autres et un ou plusieurs supports d'ancrage (11) destiné à être fixé à la charpente (3), chaque support d'ancrage (11) étant fixée à une pluralité d'organes d'ancrage (16).

8. Ensemble de montage selon la revendication 7, dans lequel le support d'ancrage (11) est un élément profilé présentant une direction longitudinale qui est destinée à être disposée transversalement à la direction de la pente de la toiture.

9. Ensemble de montage selon la revendication 7 ou 8, dans lequel l'ensemble comprend un coulisseau fixé à l'un des organes d'ancrage (16), ledit coulisseau étant monté coulissant sur le support d'ancrage (11) et étant équipé de moyens de serrage configurés pour autoriser le coulissement du coulisseau dans une position desserrée et pour fixer le coulisseau au support d'ancrage dans une position serrée.

10. Ensemble de montage selon la revendication 9,dans lequel le coulisseau comporte un élément supérieur de fixation (25) et un élément inférieur de fixation (26) formant les moyens de serrage et mobiles l'un par rapport à l'autre entre la position serrée dans laquelle ils serrent une partie du support d'ancrage (11) et la position desserrée dans laquelle au moins l'un des élément supérieur de fixation ou élément inférieur de fixation s'écarte de ladite partie du support d'ancrage (11).

11. Ensemble de montage selon l'une des revendications 7 à 10, dans lequel l'ensemble comprend au moins une platine de renfort (27), la platine de renfort (27) comprenant un orifice (31) configuré pour permettre au support d'ancrage (11) de traverser la platine de renfort (27), et une portion inférieure (28) comportant des orifices de fixation (32) configurés pour permettre la fixation à un élément de la charpente (3).

12. Ensemble de montage selon l'une des revendications 7 à 11, dans lequel l'ensemble comprend au moins une bride de fixation (34), la bride de fixation (34) comprenant une partie centrale (35), au moins un flanc (36) s'étendant orthogonalement à la partie centrale, un orifice (31) traversant la partie centrale et l'au moins un flanc de manière à être configuré pour permettre au support d'ancrage (11) de traverser la bride de fixation (34), et dans lequel la partie centrale (35) comprend des orifices de fixation (32) configurés pour permettre la fixation à un élément de charpente.

13. Système photovoltaïque comportant un ensemble de montage selon l'une quelconque des revendications 7 à 12 et une installation photovoltaïque (2) qui est fixée à une pluralité d'organes d'ancrage (16).

14. Procédé de montage d'un ensemble de montage selon l'une quelconque des revendications 7 à 12 sur une toiture comportant une charpente (3), dans lequel ledit procédé comprend les étapes suivantes :
- Fixer le ou les supports d'ancrage (11) à la charpente (3) ;
- Placer les tuiles (6) munies d'orifice de tuile (7) et de douilles (8) fixées à l'intérieur de chacun des orifices de tuile (7) ;
- Fixer les organes d'ancrage (16) au ou aux supports d'ancrage (11) au travers de chacune des ouvertures des douilles (8) ;
- Fixer chacun des couvercles (17) à chacun des organes d'ancrage (16) respectif.

15. Procédé de montage selon la revendication 14, dans lequel le ou les supports d'ancrage (11) sont percés avant l'étape de fixation du ou des supports d'ancrage (11) sur la charpente (3), de manière à former des orifices de support (12).

## Patentansprüche

1. Befestigungsvorrichtung (1) für die Montage einer Photovoltaikanlage (2) auf einem mit Ziegeln (5) bedeckten Tragwerk (3), wobei die Montagevorrichtung umfasst
- einen Ziegel (6), welcher dazu bestimmt ist, das Tragwerk zu bedecken und eine Öffnung im Ziegel (7);
- eine Hülse (8), welche im Inneren der Öffnung im Ziegel (7) angeordnet ist, wobei die Hülse (8) eine Öffnung aufweist;
- ein Verankerungsorgan (16), welches dazu bestimmt ist, die Photovoltaikanlage (2) auf dem Tragwerk (16) zu verankern, wobei das Verankerungsorgan (16) die Öffnung in der Hülse (8) durchquert und zum einen dazu bestimmt ist, an einem Träger (11) der Verankerung, welcher auf dem Tragwerk befestigt ist, befestigbar zu sein und zum anderen dazu bestimmt ist, mit der Photovoltaikanlage befestigbar zu sein;
- eine Abdeckung (17), welche die Öffnung in der Hülse bedeckt, um diese zu schützen, wobei die Abdeckung (17) mit einer Öffnung in der Abdeckung (20) ausgestattet ist und auf dem Verankerungsorgan (16), welches in dichter Weise die Öffnung in der Abdeckung (20) durchquert, befestigt ist, wobei die Abdeckung beabstandet von der Hülse (8) angeordnet ist, um eine Positioniertoleranz des Verankerungsorganes (16) im Verhältnis zur Hülse (8) zu garantieren
wobei die Abdeckung (17) eine Rotationsachse aufweist und die Öffnung im Deckel (20) exzentrisch zur Rotationsachse angeordnet ist, wobei die Abdeckung (17) eine Abdeckungsabdichtung (21) auf Höhe ihrer Öffnung (20) umfasst, so dass die Verbindung zwischen dem Verankerungsorgan (16) und der Abdeckung dicht ist.

2. Montagevorrichtung (1) gemäß Anspruch 1, wobei die Hülse (8) einen äußeren Randbereich umfasst, welcher mit mindestens einem Anschlag (10) ausgestattet ist, welcher konfiguriert ist, um das Einsinken der Hülse (8) in den Ziegel (6) zu begrenzen.

3. Montagevorrichtung (1) gemäß einem der vorstehenden Ansprüche, wobei die Abdeckung (17) eine Hauptwand (18) umfasst, welche gegenüber der Öffnung in der Hülse (8) angeordnet ist und einen ringförmigen Kragen (19), welcher aus der Hauptwand (18) in Richtung des Ziegels (6) hervorsteht und um die Hülse (8) herum angeordnet ist.

4. Montagevorrichtung (1) gemäß Anspruch 3, wobei die Hülse (8) eine ringförmige Einfassung (9) umfasst, welche nach Außen radial in Richtung des ringförmigen Kragens (19) hervorsteht.

5. Montagevorrichtung (1) gemäß einem der vorstehenden Ansprüche, wobei das Verankerungsorgan (16) ein Bolzen, welcher ein Gewinde aufweist, ist, wobei die Abdeckung (17) auf dem Bolzen mit mindestens zwei Muttern (22), welche auf dem Gewindes des Bolzens (16) angebracht und beiderseitig von der Abdeckung (17) angeordnet sind, befestigt ist.

6. Montagevorrichtung (1) gemäß einem der vorstehenden Ansprüche, wobei die Hülse (8) durch Verkleben in der Öffnung des Ziegels (7) befestigt ist.

7. Montageeinheit für die Montage einer Photovoltaikanlage (2) umfassend eine Vielzahl von Montagevorrichtungen (1) gemäß einem der Ansprüche 1 bis 6, welche dazu bestimmt sind, beabstandet voneinander angebracht zu sein, und eine oder mehrere Träge der Verankerung (11), welche dazu bestimmt sind, auf dem Tragwerk (3) angebracht zu sein, wobei jeder Träger der Verankerung (11) an einer Vielzahl von Verankerungsorganen angebracht ist.

8. Montageeinheit gemäß Anspruch 7, wobei der Träger der Verankerung (11) ein Profilelement ist, welches eine Längsrichtung aufweist, welche dazu bestimmt ist, transversal zur Richtung der Neigung des Daches angeordnet zu sein.

9. Montageeinheit gemäß Anspruch 7 oder 8, wobei die Einheit einen Gleiter, welcher an einem der Verankerungsorgane angebracht ist, umfasst, wobei der Gleiter verschiebbar auf dem Träger der Verankerung (17) angebracht ist und mit konfigurierten Klemmvorrichtungen ausgestattet ist, um die Verschiebung des Gleiters in eine gelöste Position zu ermöglichen und um den Gleiter in einer festen Position am Träger der Verankerung zu befestigen.

10. Montageeinheit gemäß Anspruch 9, wobei der Gleiter ein oberes Befestigungselement (25) und ein unteres Befestigungselement (26) umfasst, welche die Befestigungsmittel bilden, welche zueinander beweglich sind zwischen der festen Position, in welcher sie einen Teils des Trägers der Verankerung (11) festziehen, und der gelösten Position, in welcher mindestens eines des oberen Befestigungsmittel oder des unteren Befestigungsmittels sich von dem Teil des Trägers der Verankerung 811) entfernen.

11. Montageeinheit gemäß einem der Ansprüche 7 bis 10, wobei die Einheit mindestens eine Verstärkungsplatine (27) umfasst, wobei die Verstärkungsplatine (27) eine Öffnung (31) umfasst, welche konfiguriert ist, um dem Träger der Verankerung zu ermöglichen, die Verstärkungsplatte (27) zu durchqueren, und einen unteren Teil (28), welcher Befestigungslöcher (32) umfasst, welche konfiguriert sind, um die Befestigung an ein Element des Tragwerkes zu ermöglichen.

12. Montageeinheit gemäß einem der Ansprüche 7 bis 11, wobei die Einheit mindestens einen Befestigungsflansch (34) umfasst, wobei der Befestigungsflansch (34) einen Mittelbereich (35), mindestens eine Seitenwand (36), welche sich rechtwinklig zum Mittelbereich erstreckt, eine Öffnung (31), welche den Mittelteil und die mindestens eine Seitenwand durchquert, so dass sie konfiguriert ist, um dem Träger der Verankerung (11) die Durchquerung des Befestigungsflansches (34) zu ermöglichen, umfasst und wobei der Mittelbereich (35) Befestigungsöffnungen (32) umfasst, um die Befestigung an einem Teil des Tragwerkes zu ermöglichen.

13. Photovoltaisches System umfassend eine Montageeinheit gemäß einem der Ansprüche 7 bis 12 und eine Photovoltaikanlage (2), welche an einer Vielzahl von Verankerungsorganen (16) angebracht ist.

14. Verfahren zur Montage einer Montageeinheit gemäß einem der Ansprüche 7 bis 12 auf einem Dach umfassend ein Tragwerk (3), wobei das Verfahren die folgenden Schritte umfasst:
- Befestigen des oder der Träger der Verankerung (11) auf dem Tragwerk (3);
- Anbringen der mit Öffnungen im Ziegel (7) ausgestatteten Ziegel und der, im Inneren einer jeden Öffnung im Ziegel angebrachten Hülsen (8);
- Befestigen der Verankerungsorgane (16) an dem Träger oder den Trägern der Verankerung 811) durch jede der Öffnungen der Hülse (8);
- Befestigen einer jeden Abdeckung (17) an das jeweilige Verankerungsorgan (16).

15. Verfahren zur Montage gemäß Anspruch 14, wobei der Träger oder die Träger der Verankerung (11) vor dem Schritt des Befestigens des Trägers oder der Träger der Verankerung (11) an dem Tragwerk durchstochen werden, so dass sie Öffnungen im Träger (12) bilden.

## Claims

1. Mounting device (1) for mounting a photovoltaic system (2) on a frame (3) covered with tiles (5), the mounting device comprising:
- a tile (6) intended to cover the frame and having a tile hole (7);
- a sleeve (8) fixed inside the tile hole (7), said sleeve (8) having an opening;
- an anchoring member (16) intended to anchor the photovoltaic system (2) on the frame (3), the anchoring member (16) passing through the opening of the sleeve (8) and being, on the one hand, intended to be fixed to an anchoring support (11) fixed to the frame (3) and, on the other hand, intended to be fixed to the photovoltaic system (2);
- a cover (17) covering the opening of the sleeve to protect it, the cover (17) being provided with a cover hole (20) and being fixed to the anchoring member (16) which passes through said cover hole (20) in a sealed way, said cover (17) being placed at a distance from the sleeve (8) so as to guarantee a positioning tolerance of the anchoring member (16) with respect to the sleeve (8)
wherein the cover (17) has an axis of revolution and the cover hole (20) is offset with respect to said axis of revolution, and the cover (17) contains a cover seal (21) on its hole (20) so as to seal the connection between the anchoring member (16) and the cover (17).

2. Mounting device (1) according to claim 1 wherein the sleeve (8) comprises an outer periphery equipped with at least one stop (10) configured to limit the depression of the sleeve (8) in the tile (6).

3. Mounting device (1) according to any one of the preceding claims, wherein the cover (17) has a main wall (18) positioned opposite the opening of the sleeve (8) and an annular skirt (19) which protrudes from the main wall (18) towards the tile (6) and is arranged around the sleeve (8).

4. Mounting device (1) according to claim 3, wherein the sleeve (8) comprises an annular flange (9) projecting radially outwards in the direction of the annular skirt (19).

5. Mounting device (1) according to any one of the preceding claims, wherein the anchoring member (16) is a bolt having a thread, the cover (17) being fixed to the bolt by means of at least two nuts (22) which are mounted on the thread of said bolt (16) and positioned respectively on either side of said cover (17)

6. Mounting device (1) according to any one of the preceding claims, wherein the sleeve (8) is fixed by gluing in the tile hole (7).

7. Mounting assembly for mounting a photovoltaic system (2) comprising a plurality of mounting devices (1) according to any one of claims 1 to 6 intended to be arranged at a distance from each other and one or more anchoring supports (11) intended to be fixed to the frame (3), each anchoring support (11) being fixed to a plurality of anchoring members (16).

8. Mounting assembly according to claim 7, wherein the anchoring support (11) is a profiled element having a longitudinal direction which is intended to be arranged transversely to the direction of the slope of the roof.

9. Mounting assembly according to claim 7 or 8, wherein the assembly comprises a slide fixed to one of the anchoring members (16), said slide being slidably mounted on the anchoring support (11) and being equipped with clamping means configured to allow the slider to slide in a loosened position and to fix the slide to the anchoring support in a tightened position.

10. Mounting assembly according to claim 9, wherein the slide comprises an upper fastening element (25) and a lower fastening element (26) forming the clamping means and movable relative to each other between the tightened position in which they clamp a portion of the anchoring support (11) and the loosened position in which at least one of the upper fastening element or the lower fastening element is separated from said portion of the anchoring support (11).

11. Mounting assembly according to one of claims 7 to 10, wherein the assembly comprises at least one reinforcement plate (27), the reinforcement plate (27) comprising a hole (31) configured to allow the anchoring support (11) to pass through the reinforcement plate (27), and a lower portion (28) containing fastening holes (32) configured to allow fastening to an element of the frame (3).

12. Mounting assembly according to one of claims 7 to 11, wherein the assembly comprises at least one fastening flange (34), the fastening flange (34) comprising a central portion (35), at least one side (36) extending orthogonally to the central portion, a hole (31) passing through the central portion and at least one side so as to be configured to enable the anchoring support (11) to pass through the fastening flange (34), and wherein the central portion (35) comprises fastening holes (32) configured to allow fastening to a frame element.

13. Photovoltaic system comprising a mounting assembly according to any one of claims 7 to 12 and a photovoltaic system (2) which is attached to a plurality of anchoring members (16).

14. Method of mounting of a mounting assembly according to any one of claims 7 to 12 on a roof comprising a frame (3), wherein said method comprises the following steps:
- Fixing the anchoring support(s) ( 11) to the frame (3);
- Positioning the tiles (6) provided with tile holes (7) and sleeves (8) fixed inside each of the tile holes (7);
- Fixing the anchoring members (16) to the anchoring support(s) (11) through each of the openings of the sleeves (8);
- Fixing each of the covers (17) to each of the respective anchoring members (16).

15. Method of mounting according to claim 14, wherein the anchoring support(s) (11) are pierced before the step of fixing of the anchoring support(s) (11) on the frame (3), so as to form support holes (12).
